# EUROPÄISCHE PATENTSCHRIFT

(11) **EP 3 172 424 B1**
(45) Veröffentlichungstag und Bekanntmachung des Hinweises auf die Patenterteilung: **20.06.2018**
(21) Anmeldenummer: 15734674.3
(22) Anmeldetag: 07.07.2015
(51) Int. Cl.: F02M 17/04, F02M 17/40, F16J 3/02

(54) **REGELMEMBRAN FÜR MEMBRANVERGASER**
CONTROL DIAPHRAGM FOR DIAPHRAGM CARBURETOR
MEMBRANE DE RÉGULATION POUR CARBURATEUR À MEMBRANE

(30) Priorität: 21.07.2014 CH 10962014; 14.04.2015 CH 516152015
(43) Veröffentlichungstag der Anmeldung: 31.05.2017
(73) Patentinhaber: Dätwyler Schweiz AG, 6467 Schattdorf (CH)
(72) Erfinder: GISLER, Bruno, CH-6460 Altdorf (CH); HABERLAND, Norbert, 53881 Euskirchen (DE)
(74) Vertreter: Schneider Feldmann AG Patent- und Markenanwälte
(86) Internationale Anmeldenummer: PCT/EP2015/065483
(87) Internationale Veröffentlichungsnummer: WO 2016/012233

(56) Entgegenhaltungen:
- EP-A1- 0 396 755
- EP-A1- 1 892 414
- EP-A2- 1 286 040
- WO-A1-2014/018723
- DE-A1- 10 142 247
- US-A- 4 837 068

## Beschreibung

### Technisches Gebiet

Die Erfindung betrifft eine Regelmembran zur Regelung einer Kraftstoffzufuhr in einem Membranvergaser eines Verbrennungsmotors.

### Technischer Hintergrund

Membranvergaser werden hauptsächlich in Handgeräten, wie z.B. Motorsägen, oder in Modelflugzeugen verwendet, die jeweils lageunabhängig funktionieren müssen. Bekannte Regelmembranen sind aus gewebeverstärktem Gummi gefertigt (z.B. DE202005020877U) und weisen mittig in einem zentralen Abtastbereich eine angenietete kreisförmige Versteifungsplatte auf (z.B. EP0 608 490 A1, EP1 286 040 A2). Ein Beispiel einer solchen Regelmembran ist in den Figuren 1 bis 3 gezeigt. Die Regelmembran ist mit einem umlaufenden Befestigungsrand 3 im Vergasergehäuse gehalten und schliesst eine Regelkammer 5 dichtend ab. In der Regelkammer ist ein federbelasteter Reglerhebel 4 angeordnet ist, der im Bereich der Versteifungsplatte 6 gegen den zentralen Abtastbereich 1 der Regelmembran drückt und so einen Membranhub resp. eine axiale Auslenkung des Abtastbereichs 1 abtastet. Die Regelkammer 5 ist mit einem Vergaserraum des Membranvergaser verbunden. Die der Regelkammer abgewandte Seite der Regelmembran ist dem Umgebungsdruck ausgesetzt. Beim Betrieb des Vergasers bewirkt ein im Vergaserraum resp. in der Regelkammer entstehender Unterdruck im Bereich von wenigen Millibar einen Membranhub im Zehntel-Millimeter bis Millimeter-Bereich des zentralen Abtastbereichs 1, welcher vom Reglerhebel 4 abgetastet wird, um die Kraftstoffzufuhr zu regeln. Zur Erhöhung des maximalen Membranhubs weist die Regelmembran eine konzentrisch um die Versteifungsplatte 6 umlaufende periphere Sicke 8 auf.

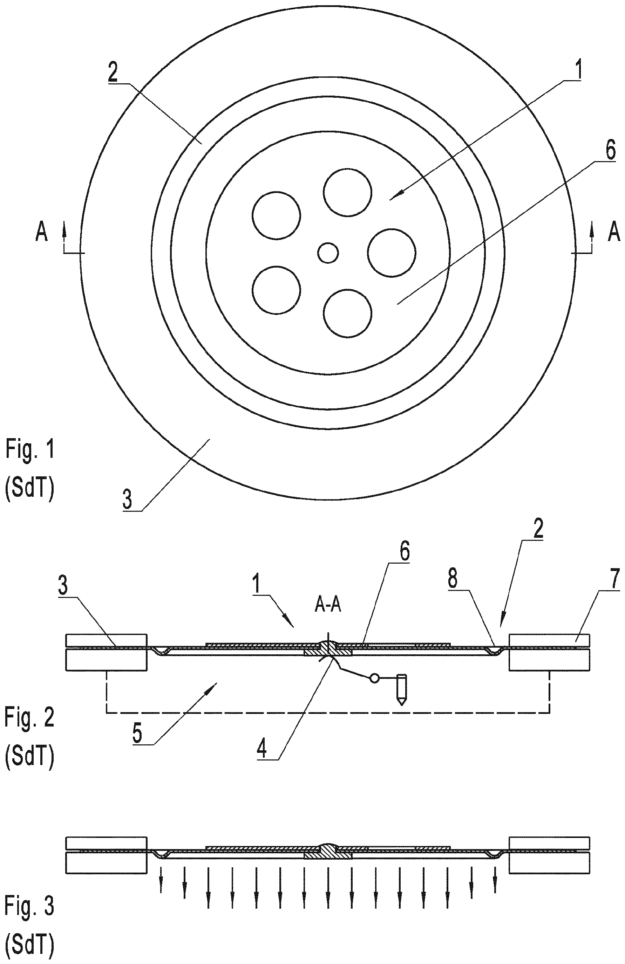

Die angenietete Versteifungsplatte, welche eine Radius von über 50% des Radius bis zum umlaufenden Befestigungsrand 3 aufweist, versteift einen weitläufigen Innenbereich der Regelmembran. Dabei bewirkt die Versteifungsplatte einen gleichmässigen Membranhub über den durch die Versteifungsplatte abgedeckten Bereich (vgl. Pfeile in Fig. 3). D.h. dieser relativ grosse zentrale Abtastbereich oszilliert in Idealfall gleichmässig in axialer Richtung. Unter realen Bedingungen neigt die Versteifungsplatte 6 allerdings zu einem "Flattern" resp. Taumeln, d.h. die Versteifungsplatte 6 lässt sich leicht aus der Membranebene neigen, insbesondere bei schnellen Lageänderungen des Vergasers, was zu Unregelmässigkeiten der Vergaserregelung während des Betriebs führen kann. Diese lageabhängigen Unregelmässigkeiten werden zudem durch die Masse der Versteifungsplatte 6 erhöht.

Ein weiteres Problem der bekannten Regelmembranen besteht darin, dass die Gummibeschichtung während dem Motorbetrieb in Kontakt mit Kraftstoff oder Kraftstoffdämpfen kommt. Dies führt zum Anquellen der Gummischicht. Bei Motorstillstand trocknet die Gummischicht uns schwillt wieder ab. Beide Prozesse finden zufällig statt, beeinflussen aber ebenfalls das Ansprech- und Regelverhalten der Regelmembran. Zudem führt ein häufiges Anquellen und Trocken zu erhöhter Rissbildung in der Gummischicht.

Auch ist die Herstellung einer solchen Regelmembran ein Mehrstufenprozess, in dessen Ergebnis relativ häufig Restspannungen, z.B. aus den verarbeiteten Textil-und Gummimaterialien, in unterschiedlichem Ausmass und zufälliger Verteilung in der Regelmembrane verbleiben. Diese beeinflussen das Regelverhalten in nicht kontrollierbarer Weise. Zudem ist eine Regelmembran mit angenietetem Versteifungselement anfällig auf Undichtheiten und Rissbildung.

Um obige Probleme teilweise zu beheben wurde in DE3827555 eine einteilige Regelmembran aus Polytetrafluorethylen (PTFE) vorgeschlagen. Diese weist anstelle der angenieteten Versteifungsplatte ein Versteifungsteil auf, welches entweder direkt an die Regelmembran angeformt oder durch Schweissen oder Kleben mit der Regelmembran verbunden ist. Das Problem des "Flatterns" und der lageabhängigen Unregelmässigkeiten wird aufgrund der Massekonzentration durch die Versteifungsplatte resp. das Versteifungsteil jedoch nicht gelöst. Auf dem Markt hat sich diese Lösung nicht durchgesetzt.

Eine weitere Regelmembran ist aus WO2014018723 bekannt. Diese weist einen mehrschichtigen Aufbau mit einer durchgehenden Schicht und einer unterbrochenen Schicht auf. Die durchgehende Schicht schliesst die Regelkammer dichtend ab und reagiert auf den Druckänderungen in der Regelkammer. Die Gesamtflexibilität der mehrschichtigen Regelmembran ist stark abhängig von der Form der unterbrochenen Schicht, die beispielsweise als Spiralfeder ausgestaltet ist. Im zentralen Abtastbereich weist die Regelmembran eine Verstärkungskörper auf. Auch diese Regelmembran ist relativ aufwendig in der Herstellung. Zudem können allfällige Ablagerungen zwischen den beiden Schichten zu Unregelmässigkeiten beim Betrieb des Vergasers führen.

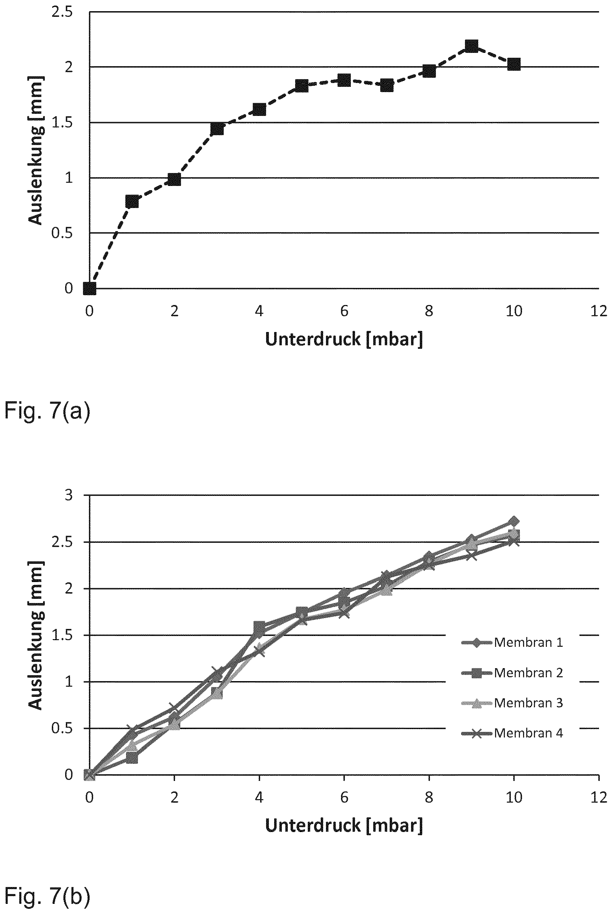

Messungen an einer bekannten Regelmembran aus gummibeschichtetem Gewebe und angenieteter Versteifungsplatte zeigen eine Druck-Weg-Kennlinie (d.h. eine Auslenkung des Abtastbereichs in Abhängigkeit vom Druckunterschied in der Regelkammer), die sich ab einem Unterdruck von ca. 4 Millibar stark abflacht (vgl. Fig. 7(a)). D.h. bei den betriebsbedingten Unterdrücken von 4 bis 8 Millibar ist die Regelempfindlichkeit stark reduziert.

### Darstellung der Erfindung

Eine Aufgabe der Erfindung ist es, eine Regelmembran anzugeben, welche die oben genannten Probleme behebt. Insbesondere sollen die lagenabhängigen Unregelmässigkeiten beim Betrieb des Vergasers verhindert werden. Weiter soll eine möglichst lineare Auslenkung über den gesamten hier auftretenden Unterdruckbereich möglich sein.

Diese wird mit einer Regelmembran mit den Merkmalen des Anspruch 1 erreicht. Die Regelmembran zur Regelung einer Kraftstoffzufuhr in einem Membranvergaser eines Verbrennungsmotors, umfasst einen zentralen, im Wesentlichen ebenen Abtastbereich, einen den Abtastbereich konzentrisch umlaufenden Funktionsbereich und eine periphere Befestigungsumrandung zur Befestigung der Regelmembran im Membranvergaser. Im eingebauten Zustand schliesst die Regelmembran eine Regelkammer des Membranvergasers dichtend ab. Über den zentralen Abtastbereich ist die Regelmembran mit einem in der Regelkammer angeordneten Reglerhebel des Membranvergasers in Wirkverbindung, welcher die axiale Auslenkung des Abtastbereichs in Abhängigkeit von einer betriebsbedingten Druckänderung in der Regelkammer abtastet und so die Kraftstoffzufuhr regelt. Die Regelmembran besteht aus einer temperartur- und kraftstoffbeständigen, nicht-elastomeren und gleichmässig dicken Kunststofffolie gefertigt, in welche eine Vielzahl den Funktionsbereich ausbildende konzentrische Sicken eingeformt sind, so dass die axiale Auslenkung des Abtastbereichs in Abhängigkeit der betriebsbedingten Druckänderung in der Regelkammer entsprechend einer vordefinierten Weg-Druck-Kennlinie verläuft.

Bis anhin galt die gängige Meinung, dass bei Regelmembranen eine Versteifungsplatte zwingend notwendig sei, da sich sonst der Reglerhebel in die Membran eindrücken würde und so nur eine geringe Auslenkung möglich sei (vgl. DE3827555). Jedoch hat sich nun gezeigt, dass dies nicht der Fall ist. Die an sich steife Kunststofffolie verhindert bereits ein Eindrücken des Reglerhebels im zentralen Abtastbereich der Regelmembran, wie es bei den bekannten Gummimembranen der Fall sein kann. Eine Versteifungsplatte ist nicht vorhanden und nicht notwendig. Unregelmässigkeiten beim Betrieb durch Lageänderungen des Vergasers werden vermieden, indem die Membran über den gesamten Bereich eine im Wesentlichen gleichmässige Dicke und daher keine Massekonzentrationen aufweist.

Der Funktionsbereich definiert den Bereich der Regelmembran, welcher hauptsächlich die Flexibilität und Dehnbarkeit der Regelmembran festlegt. Mit einer Vielzahl konzentrische Verformungen im Funktionsbereich wird die Flexibilität und das Dehnungsvermögen der Kunststofffolie derart beeinflusst, dass das Biegeverhalten (Abflachen der Sicken) der Regelmembran gegenüber einer Materialdehnung innerhalb der Membran dominiert. Dies erlaubt sogar eine im Wesentlichen lineare Auslenkung gegenüber der betriebsbedingten Druckänderung in der Regelkammer resp. eine im Wesentlichen lineare Weg-Druck-Kennlinie. Bei den bekannten gummibeschichteten Regelmembranen dominiert die Materialdehnung innerhalb der Membran, sodass die Zunahme der Auslenkung mit zunehmendem Unterdruck stark abnimmt (nicht-lineare Weg-Druck-Kennlinie). Eine annähernd lineare Weg-Druck-Kennlinie ist nicht möglich. In Simulationen hat sich allerdings gezeigt, dass durch Variation der Anzahl Sicken und der Sickengeometrie (Wellenlänge, Amplitude) in radialer Richtung das Ansprechverhalten der Regelmembran fast beliebig zwischen einer nicht-lineare Weg-Druck-Kennlinie (Dominanz der Materialdehnung) bis hin zu einer lineare Weg-Druck-Kennlinie (Dominanz des Biegeverhaltens) eingestellt werden kann.

In einigen Ausführungsformen sind im Funktionsbereich vier bis zehn konzentrische Sicken eingeformt. Die konzentrischen Sicken können als konzentrische Kreise oder konzentrische Mehrecke ausgebildet sein.

In einigen Ausführungsformen können die konzentrischen Sicken im Funktionsbereich mit radialen Verformungen resp. radialen Versteifungsrippen kombiniert sein, die sich bevorzugt nur über die innersten konzentrischen Sicken erstrecken. D.h. im Funktionsbereich können mehrere radiale Versteifungsrippen ausgebildet sein, die bevorzugt am äusseren Rand des Abtastbereichs ansetzen und im Funktionsbereich radial resp. strahlenförmig nach aussen verlaufen. Je nach gewünschter Versteifung kann die Länge und Anzahl der Versteifungsrippen variiert werden. Die Anzahl kann zwischen 3 bis 12 Versteifungsrippen variieren. Gute Ergebnisse wurden mit 6 Versteifungsrippen erreicht. In der Regel erstrecken sich die Versteifungsrippen nur über die innersten, konzentrischen Sicken d.h. bis etwa in die Mitte des Funktionsbereichs. Dabei wird der innere Funktionsbereich gegenüber dem äusseren Funktionsbereich versteift. Die Versteifung bewirkt eine Stabilisierung des Abtastbereichs in Bezug auf unerwünschtes Verkippen. Eine Versteifung mittels einer Versteifungsplatte oder mittels einer Erhöhung der Materialstärke im Zentrum der Membran - wie bei den bekannten Regelmembranen - ist nicht erforderlich. Die Versteifungsrippen sind wie bereits die konzentrischen Sicken in die Kunststofffolie eingeformt. Dabei wird eine Versteifung ohne Erhöhung der Masse erreicht.

In der Regel sind die konzentrischen Sicken in radialer Richtung wellenförmig ausgebildet. Die in radialer Richtung wellenförmig ausgebildeten Sicken können eine Amplitude (von Wellenberg zu Wellental) von 0.2 bis 1.0 Millimeter und/oder eine Wellenlänge von 1.0 bis 2.5 Millimeter aufweisen. In der Regel ist die Wellenlänge und die Amplitude über den gesamten Funktionsbereich konstant. Die Wellenlänge kann aber auch zum zentralen Abtastbereich hin zunehmen und/oder die Amplitude kann zum zentralen Abtastbereich hin abnehmen, um die Flexibilität der Regelmembran zum zentralen Abtastbereich hin zu erhöhen. Zudem kann die Flexibilität durch die Dicke der Kunststofffolie beeinflusst werden. In einigen Ausführungsformen weist die Kunststofffolie eine Dicke von 20 bis 100 Mikrometer, vorzugsweise 25 bis 50 Mikrometer, auf. Hierbei ist jedoch die Foliendicke über die gesamte Folie mindestens annähernd gleich.

Die Regelmembran wird mit deren Befestigungsumrandung in einem Vergaser fixiert, so dass der Abtastbereich und der Funktionsbereich einen aktiven freiliegenden Bereich der Regelmembran definieren, welcher auf Druckänderungen in der Regelkammer reagieren kann. Der zentrale Abtastbereich ist in der Regel eben ausgebildet und liegt im Wesentlichen in der Ebene der Befestigungsumrandung.

In einigen Ausführungsformen beträgt der Radius des Abtastbereichs weniger als 20%, vorzugsweise weniger als 15%, des inneren Radius der Befestigungsumrandung (resp. des aktiven Bereichs der Regelmembran) und/oder des äusseren Radius des Funktionsbereichs. In radialer Richtung gesehen erstreckt sich der Funktionsbereich über mindestens 80% des aktiven Bereichs der Regelmembran. Der Radius des zentralen Abtastbereichs kann 1 bis 5 Millimeter betragen. Der innerer Radius des Funktionsbereichs kann 1 bis 5 Millimeter betragen und der äussere Radius des Funktionsbereichs kann 10 bis 30 Millimeter betragen.

In einigen Ausführungsformen besteht die Kunststofffolie aus einem nicht elastomeren Kunststoff mit einer Temperaturbeständigkeit von mindestens 150°. Der Kunststoff weist vorzugsweise ein E-Modul (DIN EN ISO 527) von mehr als 800 N/mm², weiter vorzugsweise mehr als 2500 N/mm², auf. Der Kunststoff kann ausgewählt sein aus der Gruppe von Polybenzimidazol (PBI), Polyimide (PI), Thermoplastische Polyimide (TPI), Polyamid-Imid (PAI), Polyethersulfon (PES), Polyphenylsulfon (PPSU), Polyetherimid (PEI), Polysulfon (PSU), Polyetherketon (PEK), Polyaryletherketon (PAEK), Polyphenylensulfid (PPS), Perfluor-Alkoxy-Polymer (PFA), Ethylen-Tetrafluorethylen (ETFE), Polychlor-triflourethylen (PCTFE), Polyvinylidenfluorid (PVDF), Polybutylenterephtalat (PBT) oder Polyetheretherketon (PEEK). Bevorzugt wird ein chemisch beständiger, insbesondere ein kraftstoffbeständiger Kunststoff gewählt.

Ein besonderer Vorteil der erfindungsgemässen Regelmembran ist, dass sie ohne separate oder angeformte Versteifungsplatte auskommt. Auch ist eine Versteifung des Abtastbereiches durch eine erhöhte Materialstärke im Sinne einer massenerhöhenden Versteifung resp. ein zentrales Versteifungsteil - wie beispielsweise in DE3827555 vorgeschlagen - nicht notwendig. Die Regelmembran weist keine Massenkonzentration im Zentrum auf, was im Betrieb (z.B. in einem Membranvergaser) zu keinen lageabhängigen Unregelmässigkeiten führt. Ein weiterer erheblicher Vorteil besteht in der einfachen Herstellung, da Regelmembran mittels Thermoformen aus Folienmaterial gefertigt werden kann. Im Gegensatz zu komplizierter aufgebauten gewebeverstärkten Gummimembranen kann eine einfache, einschichtige Folie verwendet werden.

Weiter betrifft die Erfindung einen Membranvergaser mit einer erfindungsgemässen Regelmembran und die Verwendung der erfindungsgemässen Regelmembran in einem Membranvergaser.

### Kurze Erläuterung zu den Figuren

Die Erfindung soll nachfolgend anhand von Ausführungsbeispielen im Zusammenhang mit der Zeichnung näher erläutert werden. Es zeigen:
- Fig. 1: eine Aufsicht auf eine bekannte Regelmembran mit angenieteter Versteifungsplatte;
- Fig. 2: eine Schnittdarstellung der Regelmembran aus Fig. 1 im eingebauten Zustand;
- Fig. 3: eine Schnittdarstellung der Regelmembran aus Fig. 1 mit schematischer Darstellung der Auslenkung;
- Fig. 4: eine Aufsicht auf eine erfindungsgemässe Regelmembran;
- Fig. 5: eine Schnittdarstellung der Regelmembran aus Fig. 4 im eingebauten Zustand;
- Fig. 6: eine Schnittdarstellung der Regelmembran aus Fig. 4 mit schematischer Darstellung der Auslenkung;
- Fig. 7: Weg-Druck-Diagramme einer bekannten Regelmembran (Fig. 7(a)) und von erfindungsgemässen Regelmembranen (Fig. 7(b)); und
- Fig. 8: eine Aufsicht (Fig. 8(a)) und eine perspektivische Ansicht (Fig. 8(b)) einer erfindungsgemässen Regelmembran mit radialen Versteifungsrippen.

### Wege zur Ausführung der Erfindung

In den Figuren 1 bis 3 ist eine aus dem Stand der Technik bekannte Regelmembran gezeigt. Fig. 1 zeigt die Regelmembran in einer Draufsicht. Fig. 2 zeigt einen Schnittdarstellung der Regelmembran aus Fig. 1 im eingebauten Zustand. Ein Regelkammer und ein Reglerhebel sind schematisch dargestellt.

Die Regelmembran aus einem gummibeschichteten Gewebe weist mittig eine tellerförmige angenietete Versteifungsplatte 6 auf, welche einen zentralen Abtastbereich 1 der Regelmembran bildet. An den Abtastbereich 1 anschliessend weist die Regelmembran weiter einen aus einer umlaufenden peripheren Sicke 8 gebildeten Funktionsbereich 2 auf, welcher von einer Befestigungsumrandung 3 begrenzt ist. Die Regelmembran wird mit der Befestigungsumrandung 3 in Befestigungsmittel 7 eines Membranvergasers gehalten und schliesst eine Regelkammer 5 (strichlierte Linien) dichtend ab. In der Regelkammer 5 ist ein Reglerhebel 4 angeordnet, welche den Membranhub der Regelmembran abtasten kann und so die Kraftstoffzufuhr des Membranvergasers regelt. Wie bereits beschrieben, bewirkt die Versteifungsplatte 6 einen gleichmässigen Membranhub über den durch die Versteifungsplatte abgedeckten Bereich (vgl. Pfeile in Fig. 3). Im Idealfall oszilliert der von der Versteifungsplatte abgedeckte Bereich gleichmässig in axialer Richtung. Unter realen Bedingungen neigt die Versteifungsplatte 6 jedoch zum "Flattern" resp. Taumeln, d.h. die Versteifungsplatte 6 lässt sich leicht aus der Membranebene neigen, insbesondere bei schnellen Lageänderungen des Vergasers, was zu Unregelmässigkeiten der Vergaserregelung während des Betriebs führen kann.

In Fig. 7(a) ist eine Messung der Weg-Druck-Kennlinie der bekannten Membran aus Fig. 1 dargestellt. Ab einer Druckänderung von ca. 4 Millibar flacht sich die Kurve stark ab, so dass die Regelempfindlichkeit ab 4 Millibar Unterdruck stark reduziert ist.

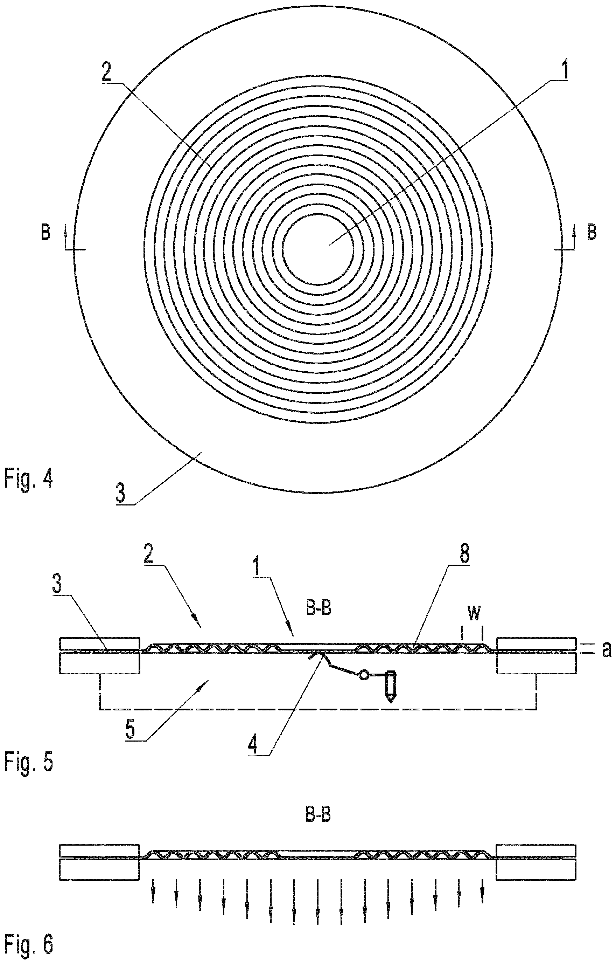

In den Figuren 4 bis 6 ist eine Ausführungsform einer erfindungsgemässen Regelmembran gezeigt. Die Regelmembran besteht aus einer Kunststofffolie mit einer Dicke von ca. 20 bis 100 Mikrometer. Für die Kunststofffolie wird ein Kunststoff mit einer Wärmebeständigkeit von mindestens 150°C ausgewählt aus der Gruppe von Polybenzimidazol (PBI), Polyimide (PI), Thermoplastische Polyimide (TPI), Polyamid-Imid (PAI), Polyethersulfon (PES), Polyphenylsulfon (PPSU), Polyetherimid (PEI), Polysulfon (PSU), Polyetherketon (PEK), Polyaryletherkteton (PAEK), Polyphenylensulfid (PPS), Perfluor-Alkoxy-Polymer (PFA), Ethylen-Tetrafluorethylen (ETFE), Polychlor-triflourethylen (PCTFE), Polyvinylidenfluorid (PVDF), Polybutylenterephtalat (PBT) oder Polyetheretherketon (PEEK). Gute Ergebnisse wurde mit einer PEEK-Folie mit einer Dicke von 25 Mikrometer erzielt (vgl. Fig. 7(b)).

Die Regelmembran weist einen Abtastbereich 1, einen Funktionsbereich 2 und eine Befestigungsumrandung 3 auf. Abtastbereich 1 und Funktionsbereich 2 definieren den aktiven freiliegenden Bereich der Regelmembran, welcher aufgrund von Druckänderungen in der Regelkammer 5 ausgelenkt wird. Über die Befestigungsumrandung 3 wird die Regelmembran in Befestigungsmitteln 7 des Vergasers dichtend gehalten. Ein in der Regelkammer 5 angeordneter Reglerhebel 4 tastet die Auslenkung des Abtastbereichs 1 der Regelmembran ab und regelt so die Kraftstoffzufuhr im Vergaser.

In der gezeigten Ausführungsform weist der Abtastbereich 1 eine Radius von weniger als 20% des Radius des aktiven Bereichs der Regelmembran auf. Der übrige Teil des aktiven Bereichs wird durch den Funktionsbereich 2 ausgebildet.

In der gezeigten Ausführungsform sind im Funktionsbereich 2 sieben konzentrische, kreisförmige Sicken in die Kunststofffolie eingeformt. In radialer Richtung sind die konzentrischen Sicken wellenförmig mit konstanter Wellenlänge w und Amplitude a ausgebildet. Die wellenförmigen Sicken erhöhen die Flexibilität und Dehnungseigenschaften der Kunststofffolie im Funktionsbereich 2. Beim Betrieb des Vergaser bewirkt der erzeugt Unterdruck in der Regelkammer ein Auslenken der Regelmembran, wobei der maximale Membranhub in zentralen Abtastbereich 1 am grössten ist. Der eben ausgebildete Abtastbereich 1 der Regelmembran erfährt hingegen aufgrund der in sich relativ dehnungsfreien Kunststofffolie kaum eine Krümmung.

Mit den konzentrischen Sicken wird die Flexibilität der Kunststofffolie derart beeinflusst, dass die maximale Auslenkung kontrolliert auf den zentralen Abtastbereich gelenkt wird, welcher derart klein und ohne zentrischer Gewichtskonzentration gewählt ist, dass keine Taumelbewegungen entstehen können - wie sie bei den bekannten Regelmembranen mit steifer oszillierender Platte und einer Beweglichkeit lediglich in der Peripherie vorkommen.

Simulationen haben gezeigt, dass die Steifigkeit der Regelmembran mit zunehmender Amplitude und zunehmender Dicke zunimmt und mit zunehmender Wellenlänge abnimmt. Durch Variation der Anzahl Sicken und der Sickengeometrie (Wellenlänge, Amplitude) in radialer Richtung kann so das Ansprechverhalten der Regelmembran fast beliebig zwischen einer nicht-lineare Weg-Druck-Kennlinie (Dominanz der Materialdehnung) bis hin zu einer lineare Weg-Druck-Kennlinie (Dominanz des Biegeverhaltens) eingestellt werden.

Die Anzahl Sicken und deren Amplituden a und Wellenlängen w können derart gewählt sein, dass die axiale Auslenkung des Abtastbereichs 1 in Abhängigkeit der betriebsbedingten Druckänderung in der Regelkammer 5 im Wesentlichen linear verläuft. Ein Beispiel eines solchen Verlaufs ist in Fig. 7(b) gezeigt. Fig. 7(b) zeigt die Messdaten von vier Regelmembranen, die aus einer PEEK-Folie mit einer Dicke von 25 Mikrometer gefertigt wurden. Der Funktionsbereich 2 weist jeweils sieben kreisförmige Sicken 8 auf, die in radialer Richtung wellenförmig ausgebildet sind. Die Amplitude beträgt etwa 0.44 Millimeter und die Wellenlänge w beträgt etwa 1.6 Millimeter. Der Radius des Abtastbereichs 1 ist etwa 3 Millimeter gross. Der äussere Radius des Funktionsbereichs 2 ist etwa 12.5 Millimeter gross.

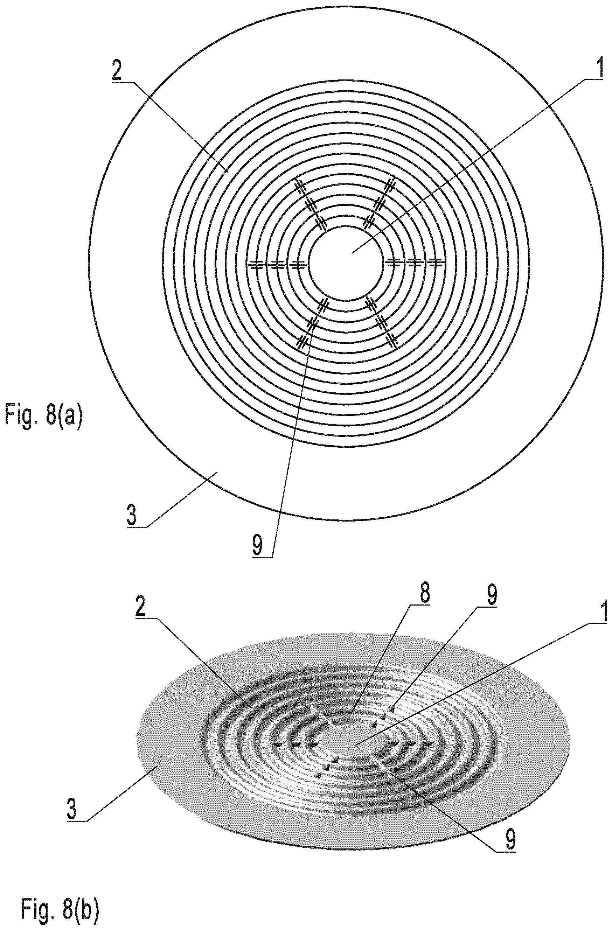

Im Unterschied zu den vorangehend beschriebenen Regelmembranen weist die Regelmembran in Fig. 8(a) und Fig. 8(b) zusätzlich radial Versteifungsrippen 9 auf, welche am äusseren Randbereich des Abtastbereichs 1 ansetzten und radial über die ersten drei konzentrischen Sicken 8 des Funktionsbereichs 2 nach aussen verlaufen. Die Höhe der Versteifungsrippen 9 kann variieren, liegt aber in der Regel in der Ebene des Abtastbereichs 1. Die Versteifungsrippen, welche wie die konzentrischen Sicken in die Kunststofffolie eingeformt sind, führen zu einer lokalen Versteifung der Membran ohne Erhöhung der Masse. Der Grad der Versteifung kann durch die Anzahl, die Länge, die Breite und die Höhe der Versteifungsrippen beeinflusst werden. Von der dargestellten Seite her gesehen, sind die Versteifungsrippen als Erhöhungen in den Wellentälern ausgebildet. Von der anderen Seite her gesehen sind die Versteifungsrippen als Einschnitte in den Wellenbergen ausgebildet.

### Bezeichnungsliste

- 1: Abtastbereich
- 2: Funktionsbereich
- 3: Befestigungsumrandung
- 4: Reglerhebel
- 5: Regelkammer
- 6: Versteifungsplatte
- 7: Befestigungsmittel
- 8: konzentrische Sicken
- 9: radiale Versteifungsrippen

## Patentansprüche

1. Regelmembran zur Regelung einer Kraftstoffzufuhr in einem Membranvergaser eines Verbrennungsmotors, umfassend einen zentralen, im Wesentlichen ebenen Abtastbereich (1), einen den Abtastbereich (1) konzentrisch umlaufenden Funktionsbereich (2) und eine periphere Befestigungsumrandung (3) zur Befestigung der Regelmembran im Membranvergaser;
wobei die Regelmembran im eingebauten Zustand eine Regelkammer (5) des Membranvergasers dichtend abschliesst und über den zentralen Abtastbereich (1) mit einem in der Regelkammer (5) angeordneten Reglerhebel (4) des Membranvergasers in Wirkverbindung ist, welcher die axiale Auslenkung des Abtastbereichs (1) in Abhängigkeit von einer betriebsbedingten Druckänderung in der Regelkammer (5) abtastet;
**dadurch gekennzeichnet, dass**
die Regelmembran aus einer temperatur- und kraftstoffbeständigen, nicht-elastomeren und gleichmässig dicken Kunststofffolie besteht, in welche eine Vielzahl den Funktionsbereich (2) ausbildende konzentrische Sicken (8) eingeformt sind, so dass die axiale Auslenkung des Abtastbereichs (1) in Abhängigkeit der betriebsbedingten Druckänderung in der Regelkammer (5) entsprechend einer vordefinierten Weg-Druck-Kennlinie verläuft.

2. Regelmembran nach Anspruch 1, **dadurch gekennzeichnet, dass** im Funktionsbereich (2) vier bis zehn konzentrische Sicken (8) eingeformt sind.

3. Regelmembran nach einem der vorangehenden Ansprüche, **dadurch gekennzeichnet, dass** die Sicken (8) als konzentrische Kreise oder konzentrische Mehrecke ausgebildet sind.

4. Regelmembran nach einem der vorangehenden Ansprüche, **dadurch gekennzeichnet, dass** die konzentrischen Sicken in radialer Richtung wellenförmig ausgebildet sind.

5. Regelmembran nach Anspruch 4, **dadurch gekennzeichnet, dass** die in radialer Richtung wellenförmig ausgebildeten Sicken (8) eine Amplitude (a) von 0.2 bis 1.0 Millimeter (von Wellenberg zu Wellental) und/oder eine Wellenlänge (w) von 1.0 bis 2.5 Millimeter aufweisen.

6. Regelmembran nach einem der Ansprüche 4 bis 5, **dadurch gekennzeichnet, dass** die Wellenlänge (w) zum zentralen Abtastbereich hin zunimmt und/oder die Amplitude (a) zum zentralen Abtastbereich hin abnimmt.

7. Regelmembran nach einem der vorangehenden Ansprüche, **dadurch gekennzeichnet, dass** der Radius des Abtastbereichs weniger als 20%, vorzugsweise weniger als 15%, des inneren Radius der Befestigungsumrandung (3) und/oder des äusseren Radius des Funktionsbereichs (2) beträgt.

8. Regelmembran nach einem der vorangehenden Ansprüche, **dadurch gekennzeichnet, dass** der Radius des Abtastbereichs (1) 1 bis 5 Millimeter beträgt und/oder der innerer Radius des Funktionsbereichs (2) 1 bis 5 Millimeter beträgt und der äussere Radius des Funktionsbereichs (2) 10 bis 20 Millimeter beträgt.

9. Regelmembran nach einem der vorangehenden Ansprüche, **dadurch gekennzeichnet, dass** im Funktionsbereich (2) mehrere radiale Versteifungsrippen (9) ausgebildet sind, die sich bevorzugt nur über die innersten konzentrischen Sicken (8) erstrecken.

10. Regelmembran nach einem der vorangehenden Ansprüche, **dadurch gekennzeichnet, dass** die Kunststofffolie eine Dicke von 20 bis 100 Mikrometer, vorzugsweise 25 bis 50 Mikrometer, aufweist, die über die gesamte Regelmembranfläche mindestens annähernd gleich ist.

11. Regelmembran nach einem der vorangehenden Ansprüche, **dadurch gekennzeichnet, dass** die Kunststofffolie aus einem Kunststoff mit einer Temperaturbeständigkeit von mindestens 150° besteht.

12. Regelmembran nach einem der vorangehenden Ansprüche, **dadurch gekennzeichnet, dass** der Kunststoff ausgewählt ist aus der Gruppe von Polybenzimidazol (PBI), Polyimide (PI), Thermoplastische Polyimide (TPI), Polyamid-Imid (PAI), Polyethersulfon (PES), Polyphenylsulfon (PPSU), Polyetherimid (PEI), Polysulfon (PSU), Polyetherketon (PEK), Polyaryletherkteton (PAEK), Polyphenylensulfid (PPS), Perfluor-Alkoxy-Polymer (PFA), Ethylen-Tetrafluorethylen (ETFE), Polychlor-triflourethylen (PCTFE), Polyvinylidenfluorid (PVDF), Polybutylenterephtalat (PBT) oder Polyetheretherketon (PEEK).

13. Regelmembran nach einem der vorangehenden Ansprüche, **dadurch gekennzeichnet, dass** der Kunststoff eine E-Modul gemessen nach DIN EN ISO 527 von mehr als 800 N/mm², vorzugsweise mehr als 2500 N/mm², aufweist.

14. Membranvergaser mit einer Regelmembran nach einem der vorangehenden Ansprüche.

15. Verwendung einer Regelmembran nach einem der Ansprüche 1 bis 13 als Regelmembran in einem Membranvergaser.

## Claims

1. A control diaphragm for controlling a fuel feed in a diaphragm carburetor of an internal combustion engine, comprising a central, substantially flat sensing zone (1), a functional zone (2) extending concentrically around the sensing zone (1) and a peripheral fastening border (3) for fastening the control diaphragm in the diaphragm carburetor;
wherein the control diaphragm closes in the installed state a control chamber (5) of the diaphragm carburetor in a sealing manner and the central sensing zone (1) of the control diaphragm is operatively connected to a controlling lever (4) of the diaphragm carburetor, which is arranged in the control chamber (5) and senses the axial deflection of the sensing zone (1) in dependence on an operational pressure change in the control chamber (5);
**characterized in that**
the control diaphragm consists of a thermally stable and fuel-resistant, non-elastomeric plastic film with uniform thickness, in which a plurality of concentric corrugations (8) forming the functional zone (2) are formed such that the axial deflection of the sensing zone (1) in dependence on the operational pressure change in the control chamber (5) progresses in accordance with a predefined displacement/pressure characteristic.

2. The control diaphragm according to claim 1, **characterized in that** four to ten concentric corrugations (8) are formed in the functional zone (2) .

3. The control diaphragm according to one of the preceding claims, **characterized in that** the corrugations (8) are realized in the form of concentric circles or concentric polygons.

4. The control diaphragm according to one of the preceding claims, **characterized in that** the concentric corrugations are realized in a wavelike manner in the radial direction.

5. The control diaphragm according to claim 4, **characterized in that** the radially wavelike corrugations (8) have an amplitude (a) between 0.2 and 1.0 millimeter (from wave crest to wave trough) and/or a wavelength (w) between 1.0 and 2.5 millimeter.

6. The control diaphragm according to one of claims 4-5, **characterized in that** the wavelength (w) increases toward the central sensing zone and/or the amplitude (a) decreases toward the central sensing zone.

7. The control diaphragm according to one of the preceding claims, **characterized in that** the radius of the sensing zone amounts to less than 20%, preferably less than 15%, of the inner radius of the fastening border (3) and/or the outer radius of the functional zone (2).

8. The control diaphragm according to one of the preceding claims, **characterized in that** the radius of the sensing zone (1) lies between 1 and 5 millimeters and/or the inner radius of the functional zone (2) lies between 1 and 5 millimeters and the outer radius of the functional zone (2) lies between 10 and 20 millimeter.

9. The control diaphragm according to one of the preceding claims, **characterized in that** several radial reinforcing ribs (9) are formed in the functional zone (2) and preferably extend over the innermost concentric corrugations (8) only.

10. The control diaphragm according to one of the preceding claims, **characterized in that** the thickness of the plastic film is between 20 and 100 micrometers, preferably between 25 and 50 micrometer, and is at least approximately identical over the entire control diaphragm surface.

11. The control diaphragm according to one of the preceding claims, **characterized in that** the plastic film consists of a plastic with a thermal stability of at least 150°.

12. The control diaphragm according to one of the preceding claims, **characterized in that** the plastic is selected from the group comprising polybenzimidazole (PBI), polyimide (PI), thermoplastic polyimide (TPI), polyamideimide (PAI), polyethersulfone (PES), polyphenylene sulfon (PPSU), polyetherimide (PEI), polysulfone (PSU), polyetherketone (PEK), polyaryletherketone (PAEK), polyphenylene sulfide (PPS), perfluoroalkoxy polymer (PFA), ethylene tetrafluoroethylene (ETFE), polychlortrifluoroethylene (PCTFE), polyvinylidenefluoride (PVDF), polybuteneterephthalate (PBT) or polyetheretherketone (PEEK).

13. The control diaphragm according to one of the preceding claims, **characterized in that** the plastic has a modulus of elasticity according to DIN EN ISO 527 of more than 800 N/mm², preferably more than 2500 N/mm².

14. A diaphragm carburetor with a control diaphragm according to one of the preceding claims.

15. The utilization of a control diaphragm according to one of claims 1-13 as control diaphragm in a diaphragm carburetor.

## Revendications

1. Membrane de régulation destinée à réguler une alimentation de carburant dans un carburateur à membrane d'un moteur thermique, comprenant une zone de balayage (1) centrale, sensiblement plane, une zone fonctionnelle (2) entourant de manière concentrique la zone de balayage (1) et une bordure de fixation (3) périphérique pour la fixation de la membrane de régulation dans le carburateur à membrane ;
dans la position montée, la membrane de régulation fermant de manière étanche une chambre de régulation (5) du carburateur à membrane et étant en liaison active, par l'intermédiaire de la zone de balayage (1) centrale avec un levier régulateur (4) du carburateur à membrane placé dans la chambre de régulation (5), lequel balaye dans la chambre de régulation (5) la déviation axiale de la zone de balayage (1) en fonction d'un changement de pression consécutif au fonctionnement ;
**caractérisée en ce que**
la membrane de régulation est constituée d'un film de matière plastique non élastomère et d'épaisseur constante, résistant à la température et au carburant, dans lequel est façonnée une pluralité de moulures (8) concentriques, formant la zone fonctionnelle (2), de sorte que la déviation axiale de la zone de balayage (1) s'écoule en fonction du changement de pression consécutif au fonctionnement dans la chambre de régulation (5), en correspondance avec une courbe caractéristique course/pression prédéfinie.

2. Membrane de régulation selon la revendication 1, **caractérisée** en ce dans la zone fonctionnelle (2) sont façonnées de quatre à dix moulures (8) concentriques.

3. Membrane de régulation selon l'une quelconque des revendications précédentes, **caractérisée en ce que** les moulures (8) sont conçues sous la forme de cercles concentriques ou de polygones concentriques.

4. Membrane de régulation selon l'une quelconque des revendications précédentes, **caractérisée en ce que** dans la direction radiale, les moulures concentriques sont conçues en forme d'ondes.

5. Membrane de régulation selon la revendication 4, **caractérisée en ce que** les moulures (8) conçues en forme d'ondes dans la direction radiale présentent une amplitude (a) de 0.2 à 1.0 millimètre (de la crête de l'onde au creux de l'onde) et/ou présentent une longueur d'ondes (w) de 1.0 à 2.5 millimètres.

6. Membrane de régulation selon l'une quelconque des revendications 4 à 5, **caractérisée en ce que** la longueur d'ondes (w) s'accroît en direction de la zone de balayage et/ou l'amplitude (a) décroît en direction de la zone de balayage.

7. Membrane de régulation selon l'une quelconque des revendications précédentes, **caractérisée en ce que** le rayon de la zone de balayage correspond à moins de 20%, de préférence moins de 15% du rayon intérieur de la bordure de fixation (3) et/ou correspond au rayon extérieur de la zone fonctionnelle (2).

8. Membrane de régulation selon l'une quelconque des revendications précédentes, **caractérisée en ce que** le rayon de la zone de balayage (1) est de 1 à 5 millimètres et/ou le rayon intérieur de la zone fonctionnelle (2) est de 1 à 5 millimètres et le rayon extérieur de la zone fonctionnelle (2) est de 10 à 20 millimètres.

9. Membrane de régulation selon l'une quelconque des revendications précédentes, **caractérisée en ce que** dans la zone fonctionnelle (2) sont conçues plusieurs nervures de renfort (9) radiales qui s'étendent de préférence seulement sur les moulures (8) concentriques les plus à l'intérieur.

10. Membrane de régulation selon l'une quelconque des revendications précédentes, **caractérisée en ce que** le film de matière plastique présente une épaisseur de 20 à 100 micromètres, de préférence de 25 à 50 micromètres, qui sur l'ensemble de la surface de la membrane de régulation est au moins approximativement égale.

11. Membrane de régulation selon l'une quelconque des revendications précédentes, **caractérisée en ce que** le film de matière plastique est constitué d'une matière plastique présentant une résistance thermique d'au moins 150°.

12. Membrane de régulation selon l'une quelconque des revendications précédentes, **caractérisée en ce que** la matière plastique est choisie dans le groupe comprenant le polybenzimidazole (PBI), les polyimides (PI), les polyimides thermoplastiques (TPI), les polyamide-imides (PAI), le polyéthersulfone (PES), le polyphénylsulfone (PPSU), le polyétherimide (PEI), le polysulfone (PSU), le polyéthercétone (PEK), le polyaryléthercétone (PAEK), le polysulfure de phénylène (PPS), le perfluoro-alcoxy-polymère (PFA), l'éthylène-tétrafluoroéthylène (ETFE), le polychlorotrifluoroéthylène (PCTFE), le polyfluorure de vinylidène (PVDF), le polybutylènetéréphtalate (PBT) ou le polyétheréthercétone (PEEK).

13. Membrane de régulation selon l'une quelconque des revendications précédentes, **caractérisée en ce que** la matière plastique présente un module d'élasticité mesuré selon la norme DIN EN ISO 527 de plus de 800 N/mm², de préférence de plus de 2500 N/mm².

14. Carburateur à membrane doté d'une membrane de régulation selon l'une quelconque des revendications précédentes.

15. Utilisation d'une membrane de régulation selon l'une quelconque des revendications 1 à 13 en tant que membrane de régulation dans un carburateur à membrane.
